(19) Europäisches Patentamt
European Patent Office
Office européen des brevets

(11) **EP 4 080 413 A1**

(12) **EUROPEAN PATENT APPLICATION**

(43) Date of publication:
**26.10.2022 Bulletin 2022/43**

(21) Application number: **21178125.7**

(22) Date of filing: **08.06.2021**

(51) International Patent Classification (IPC):
**G06N 3/04** (2006.01)     **G06N 3/08** (2006.01)
**B60W 60/00** (2020.01)

(52) Cooperative Patent Classification (CPC):
**G06N 3/0454; B60W 60/0011; G06N 3/0445;
G06N 3/08**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **21.04.2021 IN 202141018445**

(71) Applicant: **Continental Autonomous Mobility
Germany GmbH
85057 Ingolstadt (DE)**

(72) Inventors:
• **Shankar, Meghana
90411 Nürnberg (DE)**
• **Rajput, Sajeev
90411 Nürnberg (DE)**

(74) Representative: **Continental Corporation
c/o Continental Automotive GmbH
Intellectual Property
Nordostpark 30
90411 Nürnberg (DE)**

(54) **COMPUTER-IMPLEMENTED METHOD TRAINING A CNN / RNN FOR AUTONOMOUS DRIVING UTILIZING REINFORCEMENT LEARNING**

(57)     The present invention relates to a computer-implemented method of training a convolutional neural network (CNN) and in particular a recurrent neural network (RNN) for autonomous driving, in particular of an autonomous car. Sets of training representations of surroundings of vehicles are recorded during real drives of real vehicles and corresponding driving states are recorded during the respective real drives of the real vehicles. Said recorded training representations of surroundings and corresponding driving states are used as sets of training data. This training data is used in training the CNN / RNN for autonomous driving of vehicles by providing driving states as output that can be used to derive control actions for the vehicles.

FIG 1

EP 4 080 413 A1

**Description**

The present invention is related to a computer-implemented method of training a convolutional neural network (CNN) and in particular a recurrent neural network (RNN) for autonomous driving, in particular of an autonomous vehicle, by utilizing reinforcement learning.

Autonomous driving of vehicles like cars enables maneuvering vehicles along routes and through traffic without manual interaction of drivers with the vehicles. Driving policies or tactical level guidance allows the vehicles to make maneuvering decisions in real time. Thereby, environment states are mapped to actions that are to be taken for the vehicle to navigate through the driving environment (i.e. follow a rout while considering the present traffic). The environment states are derived from different sensors of the vehicles like cameras, radar sensors, LIDAR sensors, ultrasound sensors and the like.

Earlier, heuristic and hand designed rules were used for tactical decision making. Then, trajectory planning using potential fields and control policy were used.

Currently, a lot of advances are made in the field of supervised learning and reinforcement learning. Due to their capabilities and success in pattern recognition tasks and their ability to generalize well, CNNs and, in particular, RNNS are used to achieve higher level of automation for autonomous (i.e. self-driving) vehicles.

For example, it is known to use a CNN / RNN that has been trained end-to-end with supervised learning (i.e. labelled training data) to output steering decisions directly from sensor images. The supervised learning approach is restricted to end-to end learning and, thus, does not consider feedback from the system. Hence, the CNN / RNN cannot learn from exploring new environments, new driving scenarios and, moreover, it needs labelled data to be made available.

It is also known to use reinforcement learning approaches for learning different tactical decision policies by using feedbacks from the driving environments. For reinforcement learning driving scenarios are implemented in simulator environments where the feedback and input is artificially created.

It is therefore an object of the present invention to provide an improved method of training a convolutional neural network (CNN) for autonomous driving as well as a corresponding computer program, computer-readable medium and data processing system.

According to a first aspect of the present invention a computer-implemented method of training a convolutional neural network (CNN), in particular a recurrent neural network (RNN), for autonomous driving, comprises the steps of:

  providing a CNN, in particular an RNN, configured to receive representations of surroundings of vehicles as input and to provide driving states for deriving control actions for autonomous driving vehicles as output;
  providing training data comprising sets of training representations of surroundings of vehicles and corresponding driving states to derive the ground truth;
  training the CNN based on randomly selected sets of training representations and corresponding driving states from the training data.

Thereby, the sets of training representations of surroundings of vehicles were recorded during real drives of real vehicles. Further, the corresponding driving states were recorded during the respective real drives of the real vehicles.

According to a second aspect of the present invention a computer program comprises instructions which cause a computer to execute the steps of the computer-implemented method according to the first aspect of the present invention.

According to a third aspect of the present invention a computer-readable medium has stored thereon the computer program according to the second aspect of the present invention.

According to a fourth aspect of the present invention a data processing system comprises means for executing the computer-implemented method according to the first aspect of the present invention.

The present invention aims to exploit machine learning for learning maneuvering decisions directly from sensor maps. In particular, optimal driving states for different road scenarios are learned based on real driving scenarios such as curves, exits, entries ramps and straight roads directly from input sensor data like radar maps and getting feedbacks from the actual human driver actions in these driving scenarios. For example, stationary radar grids, which can easily recognize these road scenarios, are utilized as input. The CNN / RNN is advantageously trained via a reinforcement learning algorithm (e.g. Deep-Q) such that the agent learns to imitate the human driver for learning the optimal driving policy. In particular, the learned optimal driving states may be restricted to velocity and steering angle / yaw rate of the vehicle. From the optimal driving states provided by the trained CNN / RNN respective control commands for autonomously driving the vehicle can be derived.

A convolutional neural network (CNN) is a deep neural network based on a shared-weight architecture of its convolution kernels or filters that shift over input features and provide translation equivariant responses. CNNs are regularized versions of multilayer perceptrons. Multilayer perceptrons usually mean fully connected networks, that is, each neuron in one layer is connected to all neurons in the next layer. CNNs take advantage of the hierarchical pattern in data and assemble patterns of increasing complexity using smaller and simpler patterns embossed in their filters. Therefore, on a scale of connectivity and complexity, CNNs are on the lower extreme. CNNs use relatively little pre-processing compared to other image classification algorithms. This means that the network learns to optimize the filters or kernels through automated learning (i.e. reinforcement learning). This independence from prior knowledge and human intervention in feature extraction is a major advantage.

A recurrent neural network (RNN) is an artificial neural network where connections between nodes form a directed graph along a temporal sequence. This allows it to exhibit temporal dynamic behavior. Derived from feedforward neural networks, RNNs can use their internal state (memory) to process variable length sequences of inputs. The term "recurrent neural network" is used indiscriminately to refer to two broad classes of networks with a similar general structure, where one is finite impulse and the other is infinite impulse. Both classes of networks exhibit temporal dynamic behavior. A finite impulse recurrent network is a directed acyclic graph that can be unrolled and replaced with a strictly feedforward neural network, while an infinite impulse recurrent network is a directed cyclic graph that cannot be unrolled. Both finite impulse and infinite impulse recurrent networks can have additional stored states, and the storage can be under direct control by the neural network. The storage can also be replaced by another network or graph, if that incorporates time delays or has feedback loops. Such controlled states are referred to as gated state or gated memory, and are part of long short-term memory networks (LSTMs) and gated recurrent units.

The provided CNN / RNN (i.e. CNN and/or RNN) to be trained for autonomous driving of a vehicle takes representations of surroundings of vehicles and provides (optimal) driving states for the vehicles such that respective control commands for autonomously driving the vehicles can be derived.

The representations of surroundings of vehicles may be images or maps of the surroundings, in particular of the frontal surroundings, of the vehicles. Said images or maps of the surroundings of the vehicles may be captured by sensors like cameras, radar sensors, LIDAR sensors, ultrasound sensors and the like of the vehicles.

The driving states for the vehicles provided by the CNN / RNN to be trained are used to derive control commands for controlling driving parameters like acceleration / deceleration (braking) / velocity, steering angle / yaw rate / driving direction, and the like.

The provided training data includes data of real driving scenarios recorded during real drives of real vehicles. In particular, the training data comprises the sets of training representations of surroundings of vehicles and corresponding driving states as feedback to derive the ground truth. Each set comprises as input for the CNN / RNN to be trained a training representation (image/map) of a real surrounding of a real vehicle and corresponding driving states that were actually chosen by a human driver of the real vehicle in the respective real driving scenario.

The training representations of surroundings of vehicles may for example comprise (2D / 3D) images or maps of (frontal) surroundings of vehicles in curves, before exits, before entries ramps, on straight roads and the like.

The corresponding driving states are basis for the ground truth and used as feedback during training of the CNN / RNN. In particular, the ground truth used as feedback for training the CNN / RNN may be calculated from the driving state using the bellman equation for reinforcement learning. The action taken by the human driver is not the ground truth, rather it may be used to calculate the ground truth using the estimated Q-value of action and the reward received. For each of the training representations of surroundings of vehicles the corresponding driving state resembles the actual driving maneuver made by the human driver of the real vehicle. In other words, the corresponding driving states were chosen by real human drivers during the respective real driving scenarios with the real vehicles.

For training the CNN /RNN to autonomously drive a vehicle i.e. to provide (optimal) driving states for deriving respective control commands, a sub-set of training representations of surroundings of vehicles and corresponding driving states is randomly selected (drawn) from the training data. The remaining (not drawn) sets may be used for testing or validating the trained CNN / RNN. Based on the randomly selected / drawn sets an (optimal or at least sufficient) driving policy is learned.

In common supervised learning of neural networks for autonomously driving vehicles a major problem is obtaining the feedback labels for training the algorithm. According to the present invention, the real driving states chosen by a human driver (e.g. steering angle and velocity) recorded during different driving scenarios are used for generating appropriate feedback for every decision made by the CNN / RNN. The feedback is designed in such a way that in training the reward increases if the CNN / RNN takes actions similar to the human driver leading (as close as possible) to the ground truth driving states and the reward decreases if the deviation between the actions of the human driver and the actions chosen by the CNN / RNN are very different. For this, the driving states chosen by the human drivers during the respective real drives of the real vehicles are compared with the CNN / RNN outputs derived from the respective input training representations of surroundings of vehicles recorded during said real drives of the real vehicles to learn the driving policy. In particular, said driving states chosen by the human drivers during the respective real drives of the real vehicles are used to generate the ground truth outputs using the bellman equation which are compared with the outputs generated by the CNN / RNN.

For each of the training representations (images/maps) of surroundings of the randomly selected sets input to the CNN / RNN during training the CNN / RNN provides driving states as output according to its current driving policy (i.e. internal weights). This driving policy is then adjusted based on a reward that is derived from comparing the driving states output by the CNN / RNN with the corresponding ground truth driving states for the respective representations of surroundings. The training is stopped when an optimal or at least sufficient driving policy is learned by the CNN / RNN.

After training the trained CNN / RNN is configured to provide driving states that are used to derive control commands or control actions (e.g. compare current driving state of the vehicle with driving state provided by the trained CNN / RNN) for autonomously driving a vehicle.

CNNs / RNNs trained according to the present invention can be used to assist the ACC for suggesting maneuvering operations. This helps in achieving higher level of autonomy. By using real driving scenarios for training the CNN /RNN a large database (recordings) of training data is available for learning the optimal driving policy. Consequently, there is no need to model the environment (no simulations needed) and, further, no manual labelling of training data is required. Thus, providing training data is much less time consuming and expensive.

According to a refinement of the present invention the driving states comprise a velocity and a steering angle of the vehicle.

The CNN / RNN is configured to output a velocity (i.e. positive value for driving forward, negative value for driving backward, and zero for still-stand) and a steering angle or yaw rate (i.e. negative value for steering left, positive value for steering right, and zero for steering straight).

During training the CNN / RNN is trained using rewards derived from comparing the output velocity and steering angle of the CNN / RNN with the ground truth driving states i.e. ground truth velocity and steering angle that a real human driver chose in the respective driving scenario (i.e. input training representation of surrounding).

The velocity and steering angle defining the driving states provide sufficient information to derive respective control commands to autonomously drive or maneuver vehicles in different driving scenarios.

According to a further refinement of the present invention actions A of the CNN / RNN comprise a steering action and an acceleration action. The steering action may be one of a predefined number of discrete steering actions, in particular "steer left", "straight", and "steer right". The acceleration actions may be one of a predefined number of discrete acceleration actions, in particular "accelerate", "maintain velocity", and "decelerate".

A (discrete) steering action chosen by the CNN / RNN leads to the steering angle output by the CNN / RNN. Preferably, the steering action chosen by the CNN / RNN is one of the three predefined discrete steering actions "steer left", "straight", and "steer right".

An (discrete) acceleration action chosen by the CNN / RNN leads to the velocity output by the CNN / RNN. Preferably, the acceleration action chosen by the CNN / RNN is one of the three predefined discrete acceleration states "accelerate", "maintain velocity", and "decelerate".

In training the CNN / RNN the reward R may be calculated as:

$$R = -1 \times (\Delta \text{ steering angle}) -1 \times (\Delta \text{ velocity}),$$

where $\Delta$ steering angle is the difference between the steering angle of the ground truth driving state chosen by the real human driver and the steering angle of the driving state output by the CNN / RNN in training and where $\Delta$ velocity is the difference between the velocity of said ground truth driving state and the velocity of the driving state output by the CNN / RNN in training.

By using only a predefined multitude of discrete steering and acceleration actions, the computational cost for training the CNN / RNN and also for providing the driving states by the trained CNN / RNN is significantly reduced.

According to a refinement of the present invention the CNN / RNN is trained using a Q-learning approach, in particular a double Q-learning approach.

The provided CNN / RNN is trained using a Q-learning approach. Q-learning is a model-free reinforcement learning algorithm to learn the value of an action (i.e. driving actions) in a particular state (i.e. representation of surrounding). It does not require a model of the environment (hence "model-free"), and it can handle problems with stochastic transitions and rewards without requiring adaptations. For any finite Markov decision process (FMDP), Q-learning finds an optimal policy in the sense of maximizing the expected value of the total reward over any and all successive steps, starting from the current state. Q-learning can identify an optimal action-selection policy for any given FMDP, given infinite exploration time and a partly-random policy. "Q" refers to the function that the algorithm computes - the expected rewards for an action taken in a given state. In general, Reinforcement learning involves an agent, a set of states S, and a set A of actions per state. By performing an action a $\in$ A, the agent transitions from state to state. Executing an action in a specific state provides the agent with a specific reward (a numerical score). The goal of the agent is to maximize its total reward. It does this by adding the maximum reward attainable from future states to the reward for achieving its current state, effectively influencing the current action by the potential future reward. This potential reward is a weighted sum of the expected values of the rewards of all future steps starting from the current state.

The target Q value is not known and can be estimated as follows:

$$\text{Target Q Value } Q^* = R(t+1) + \gamma;$$

$$\text{Max}(Q(s(t+1),a(t))),$$

where R(t+1) is the reward R after taking action a(t), the Max Q the value of the next state can be pre-calculated given the possible actions it can take, the $\gamma$ discount factor determines the importance of future rewards (here for example $\gamma$ = 0.9 which is close to 1 since in this problem immediate rewards are the most important ones as compared to policies that learn a certain action after traversing many states).

Because the future maximum approximated action value in Q-learning is evaluated using the same Q function as in current action selection policy, in noisy environments Q-learning can sometimes overestimate the action values, slowing the learning. In order to correct this, double Q-learning may be used. Double Q-learning is an off-policy reinforcement learning algorithm, where a different policy is used for value evaluation than what is used to select the next action. Two separate value functions are trained in a mutually symmetric fashion using separate experiences, Q and Q*. Then the estimated value of the discounted future is evaluated using a different policy, which solves the overestimation issue.

This algorithm may also be combined with deep learning, as in deep Q-learning (DQN), resulting in double DQN.

The target Q value i.e. Q* is obtained by calculating the rewards R and Max(Q) i.e. the best Q value (or the max Q value) given the current state. For providing this Max(Q) value another network called the target network is used, which has the weights copied from the main deep Q network at regular intervals. When the training of the main Q network i.e. The CNN / RNN to be trained is complete, the target network is discarded. Thus, the main network (CNN / RNN to be trained) estimates the action and the target network is used to provide the Q* for action evaluation. This allows for decoupling the network for providing stable updates to the main Q network learnings.

For each of the training representations (images/maps) of surroundings of the randomly selected sets input to the CNN / RNN during training the CNN / RNN via (double) Q-learning provides driving states as output according to its current driving policy (i.e. internal weights). This driving policy is then adjusted based on the reward (R) that is derived from comparing the driving states output by the CNN / RNN with the corresponding ground truth driving states for the respective representations of surroundings. The training is stopped when an optimal or at least sufficient driving policy is learned by the CNN / RNN.

The (double) Q-learning provides for fast and reliable (no overestimation) training of the CNN / RNN for autonomous driving of vehicles.

According to a further refinement of the present invention the Q-outputs for the (double) Q-learning approach comprise tuples of the predefined number of discrete steering actions and the predefined number of discrete acceleration actions.

| Q-output | steer right | steer left | straight |
|---|---|---|---|
| accelerate | $Q_{a1}$ | $Q_{a2}$ | $Q_{a3}$ |
| decelerate | $Q_{a4}$ | $Q_{a5}$ | $Q_{a6}$ |
| maintain velocity | $Q_{a7}$ | $Q_{a8}$ | $Q_{a9}$ |

The above nine Q-outputs resemble the possible actions the CNN / RNN to be trained can take.

According to a refinement of the present invention the representations of surroundings of vehicles are static maps of the surroundings of the vehicles, in particular of the frontal surroundings of the vehicles. The static maps of the surroundings of the vehicles are generated by generalizing over a predefined number of, preferably 2 to 10 and most preferably 4, consecutive frames of a recording of the surroundings of the vehicle.

Instead of using one frame of the representations of the surroundings as the driving scenario a batch of the predefined number of frames is used to generalize (interpolate) a static map. This generalized static map is more precise and includes some temporal information, too. The magnitude of the predefined number depends on the velocity of the real vehicle in the real driving scenario. For example, if the vehicle for which the representations of the surroundings and corresponding driving states were recorded was driving with relative high velocity, e.g. 80 to 150 km/h [kilometer per hour] on a highway, less frames, e.g. 2 to 5 frames, are used for generating the static map. If the vehicle for which the representations of the surroundings and corresponding driving states were recorded was driving with relative low velocity, e.g. 20 to 70 km/h on a street in town, more frames, e.g. 6 to 10 frames, are used for generating the static map.

According to a refinement of the present invention the representations of surroundings of vehicles are recorded by a radar sensor.

The radar sensor records radar maps in form of radar grids (e.g. having a size of 200 x 160 pixels) of the (frontal) surroundings of the vehicle. Each radar map or rather static maps generalized from the predefined number of radar maps (representations) of the (frontal) surroundings of the vehicle are used as input to the CNN / RNN for generating the (optimal) driving state for autonomous driving of the vehicle.

According to a further refinement of the present invention each representation (radar map) recorded by the radar sensor is down-sampled before being input to the CNN / RNN.

Each of the recorded radar grids has a raw resolution, e.g. 200 x 160 pixels. The radar grid information is very sparse i.e. not all the locations of the radar map are populated. Thus, it is possible to down sample the radar map and yet not lose much of the information content (like edge patterns etc.), unlike would be the case with the dense information content of camera images. The sparse radar grid / map or rather the static map generalized therefrom which is used as input to the CNN / RNN can be optimized without losing much information content.

In particular, the input radar grids / maps are cropped till 120 x 160 pixels (resolution along y direction is 1.25 m, therefore the field of view is still up to 150m ahead). The radar grids / maps may then binarized since only the location of the patterns and not the intensity is of interest. Finally, the radar grids /maps are down-sampled e.g. by using (3,3) Maxpooling filter. Thus, reduction of input of up to 15x is achieved. This is for achieving a reduced size of the trained model.

Consequently, the computational cost of training and in operation of the trained CNN / RNN can be significantly reduced.

According to a refinement of the present invention the method is executed live during operation of the vehicle.

The CNN / RNN can be further trained or rather refined during operation of the (autonomous) vehicle. While the vehicle is manually driven by a human driver, the

CNN / RNN can actively learn from the current environment / driving scenario and the actions taken by the human driver using exploration mode.

Brief description of the drawings

The present invention and its technical field are subsequently explained in further detail by (an) exemplary embodiment(s) shown in the drawing(s). The exemplary embodiment(s) only conduce(s) better understanding of the pre-sent invention and in no case is/are to be construed as limiting for the scope of the present invention. Particularly, it is possible to extract aspects of the subject-matter described in the figure(s) and to combine it with other components and findings of the present description or figure(s), if not explicitly described differently. Equal reference signs refer to the same objects, such that explanations from other figures may be supplementally used.

Fig. 1     shows an exemplary view of the elements used for training a CNN / RNN for autonomous driving.

Fig. 2     exemplarily shows deriving of a reward for training the CNN / RNN.

Fig. 3     shows an exemplary embodiment of the method for training the CNN / RNN for autonomous driving.

Fig. 4     shows an exemplary embodiment of a computer-readable medium.

Fig. 5     shows an exemplary embodiment of a data processing system.

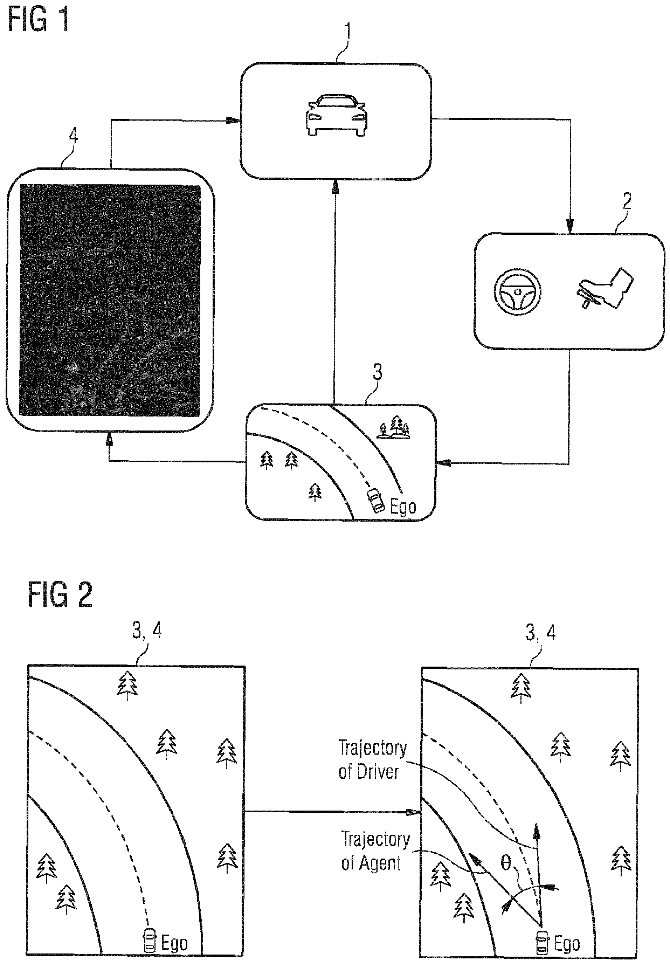

In Fig. 1 the elements used for training a CNN / RNN for autonomous driving of a vehicle are schematically depicted. A vehicle 1 is driven in different driving scenarios 3 by a human driver. Driving states 2, in particular velocity and yaw rate, as well as actions taken by the human driver, in particular accelerating actions (accelerating / decelerating / maintaining velocity) and steering actions (steering left, steering right, steering straight), are recorded. Further, representations 4, in particular maps or images (e.g. radar maps/grids), of the frontal surroundings of the vehicle in the different driving scenarios 3 are recorded. Based on the recorded representations 4 and driving states 2 the CNN / RNN is trained.

In Fig. 2 deriving of a reward for training the CNN / RNN is schematically depicted. In training the CNN / RNN one of the many representations 3 of the surroundings of a specific driving scenario is input to the CNN / RNN to be trained. The CNN / RNN selects one possible action (acceleration action and steering action) based on its current driving policy (internal weights) and outputs a resulting driving state for the autonomous vehicle. This driving state output by the CNN / RNN is compared with the corresponding driving state taken by the human driver (ground truth). Based on said comparison a reward R for training (reinforcement learning) of the CNN / RNN is derived and the driving policy of the CNN / RNN is adjusted based on the derived reward R.

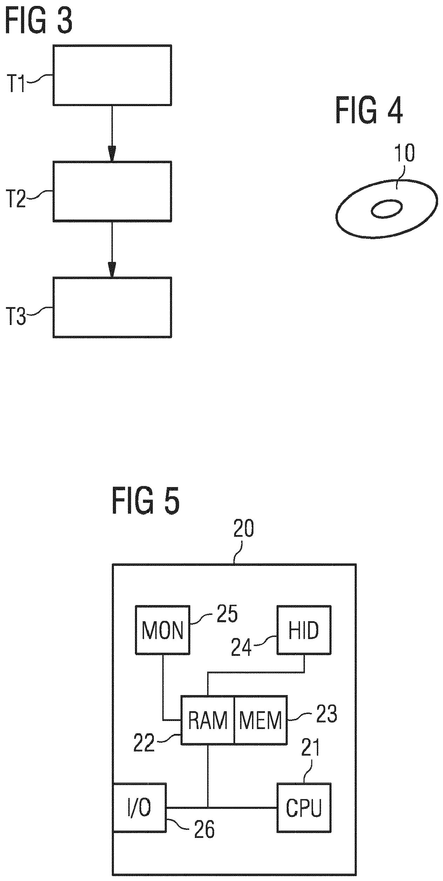

In Fig. 3 a flowchart of a method of training the CNN / RNN for autonomous driving of an (autonomous) vehicle according to the first aspect of the present invention or rather a corresponding computer program according to the second aspect of the present invention is schematically depicted. The method comprises the steps providing T1 a CNN / RNN, providing T2 training data, and training T3 the CNN / RNN.

In the step T1 a CNN, in particular an RNN, configured to receive representations of surroundings of vehicles as input and to provide driving states for deriving control actions for autonomous driving vehicles as output is provided.

In the step T2 training data comprising sets of training static maps of surroundings of vehicles and corresponding driving states including a velocity and yaw are provided to generate the ground truth therefrom. The (training) static maps are generalized from 2 to 10 radar grids recorded by a radar sensor during different driving scenarios. The static maps are cropped, binarized and down-sampled before input to the CNN / RNN (in training and also later in operation). The ground truth driving states including a velocity and a yaw rate (steering angle) are recorded by respective sensors and stored together with the corresponding training static map as one set of the training data for training the CNN / RNN. The radar grids from which the training static maps are generalized and the corresponding driving states including a velocity and a yaw rate are recorded in real driving scenarios of real vehicles driven by human drivers.

In the step T3 The CNN / RNN is trained using a double Q-learning approach. Thereto, a reward R is derived by comparing for each input training static map the driving state (velocity and yaw rate) output be the CNN / RNN based on its current driving policy with the corresponding ground truth driving state. The possible Q-outputs (actions A) the CNN / RNN can chose from are:

| Q-output | steer right | steer left | straight |
|---|---|---|---|
| accelerate | $Q_{a1}$ | $Q_{a2}$ | $Q_{a3}$ |
| decelerate | $Q_{a4}$ | $Q_{a5}$ | $Q_{a6}$ |
| maintain velocity | $Q_{a7}$ | $Q_{a8}$ | $Q_{a9}$ |

The trained CNN / RNN comprises an (optimal or at least sufficient) driving policy for deriving (optimal) driving states for an autonomous vehicle from input static maps of the surroundings of the autonomous vehicle. Based on the derived (optimal) driving states corresponding control actions or control commands for autonomously driving the autonomous vehicle can be determined.

In Fig. 4 an exemplary embodiment of the computer-readable medium 10 according to the third aspect of the present invention is schematically depicted.

Here, exemplarily a computer-readable storage disc 10 like a Compact Disc (CD), Digital Video Disc (DVD), High Definition DVD (HD DVD) or Blu-ray Disc (BD) has stored there-on the computer program according to the second aspect of the present invention and as schematically depicted in Fig. 1. However, the computer-readable medium may also be a data storage like a magnetic storage/memory (e.g. magnetic-core memory, magnetic tape, magnetic card, magnet strip, magnet bubble storage, drum storage, hard disc drive, floppy disc or removable storage), an optical storage/memory (e.g. holographic memory, optical tape, Tesa tape, Laserdisc, Phasewriter (Phasewriter Dual, PD) or Ultra Density Optical (UDO)), a magneto-optical storage/memory (e.g. MiniDisc or Magneto-Optical Disk (MO-Disk)), a volatile semiconductor/solid state memory (e.g. Random Access Memory (RAM), Dynamic RAM (DRAM) or Static RAM (SRAM)) or a non-volatile semiconductor/solid state memory (e.g. Read Only Memory (ROM), Programmable ROM (PROM), Erasable PROM (EPROM), Electrically EPROM (EEPROM), Flash-EEPROM (e.g. USB-Stick), Ferroelectric RAM (FRAM), Magnetoresistive RAM (MRAM) or Phase-change RAM).

In Fig. 5 an exemplary embodiment of the data processing system 20 according to the fourth aspect of the present invention is schematically depicted. The data processing system 20 may be a personal computer (PC), a laptop, a tablet, a server, a distributed system (e.g. cloud system) and the like. The data processing system 20 comprises a central processing unit (CPU) 21, a memory having a random-access memory (RAM) 22 and a non-volatile memory (MEM, e.g. hard disk) 23, a human interface device (HID, e.g. keyboard, mouse, touchscreen etc.) 24, an output device (MON, e.g. monitor, printer, speaker, etc.) 2 and an interface (I/O) 26 for receiving and sending data. The CPU 21, RAM 22, HID 24, MON 25 and I/O 26 are communicatively connected via a data bus. The RAM 22 and MEM 73 are communicatively connected via another data bus.

The computer program according to the second aspect of the present invention and schematically depicted in Fig. 1 can be loaded into the RAM 22 from the MEM 23 or another computer-readable medium 10. According to the computer program the CPU 21 executes the steps of the computer-implemented method of training according to the first aspect of the present invention and schematically depicted in Fig. 1. The execution can be initiated and controlled by a user via the HID 24. The status and/or result of the executed computer program may be indicated to the user by the MON 25 or output via the I/O 26. The result of the executed computer program may be permanently stored on the non-volatile MEM 23 or another computer-readable medium.

In particular, the CPU 21 and RAM 22 for executing the computer program may comprise several CPUs 21 and several RAMs 22 for example in a computation cluster or a cloud system. The HID 24 and MON 25 for controlling execution of the computer program may be comprised by a different data processing system like a terminal communicatively connected to the data processing system 20 (e.g. cloud system).

In an exemplary embodiment, the data processing system is comprised by an autonomous vehicle (e.g. part of a controller of the vehicle or communicatively connected thereto). The CNN / RNN used for autonomous driving the autonomous vehicle can be further trained i.e. refined by training the CNN / RNN with static maps and driving states recorded during manual operation of the autonomous vehicle by a human driver.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

In the foregoing detailed description, various features are grouped together in one or more examples for the purpose of streamlining the disclosure. It is understood that the above description is intended to be illustrative, and not restrictive. It is intended to cover all alternatives, modifications and equivalents as may be included within the scope of the invention. Many other examples will be apparent to one skilled in the art upon reviewing the above specification.

Specific nomenclature used in the foregoing specification is used to provide a thorough understanding of the invention. However, it will be apparent to one skilled in the art in light of the specification provided herein that the specific details are not required in order to practice the invention. Thus, the foregoing descriptions of specific embodiments of the present invention are presented for purposes of illustration and description. They are not in-tended to be exhaustive or to limit the invention to the precise forms disclosed; obviously many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated. Throughout the specification, the terms "including" and "in which" are used as the plain-English equivalents of the respective terms "comprising" and "wherein," respectively. Moreover, the terms "first," "second," and "third," etc., are used merely as labels, and are not intended to impose numerical requirements on or to establish a certain ranking of importance of their objects. In the context of the present description and claims the conjunction "or" is to be understood as including ("and/or") and not exclusive ("either ... or").

List of reference signs

| | |
|---|---|
| 1 | autonomous vehicle |
| 2 | driving state / driving actions |
| 3 | driving scenario |
| 4 | static map / radar grid |
| 10 | computer-readable medium |
| 20 | data processing system |
| 21 | CPU |
| 22 | RAM |
| 23 | MEM |
| 24 | HID |
| 25 | MON |
| 26 | I/O |

**Claims**

1. Computer-implemented method of training a convolutional neural network, CNN, in particular a recurrent neural network, RNN, for autonomous driving, comprising the steps of:

- providing (T1) a CNN, in particular an RNN, configured to receive representations of surroundings of vehicles as input and to provide driving states for deriving control actions for autonomous driving vehicles as output;
- providing (T2) training data comprising sets of training representations of surroundings of vehicles and corresponding driving states to derive the ground truth; and
- training (T3) the CNN based on randomly selected sets of training representations and corresponding driving states from the training data,

wherein the sets of training representations of surroundings of vehicles were recorded during real drives of real vehicles and

wherein the corresponding driving states were recorded during the respective real drives of the real vehicles.

2. Computer-implemented method according to claim 1,
   wherein the driving states comprise a velocity and a steering angle of the vehicle.

3. Computer-implemented method according to claim 2,
   wherein actions A of the CNN comprise a steering action and an acceleration action, and
   wherein the steering action may be one a predefined number of discrete steering actions, in particular "steer left", "straight", and "steer right" and the acceleration action may be one of a predefined number of discrete acceleration actions, in particular "accelerate", "maintain velocity", and "decelerate".

4. Computer-implemented method according to any preceding claim,
   wherein the CNN is trained using a Q-learning approach, in particular a double-Q-learning approach.

5. Computer-implemented method according to claim 4,
   wherein the Q-outputs for the Q-learning approach comprise tuples of the predefined number of discrete steering actions and the predefined number of discrete acceleration actions.

6. Computer-implemented method according to any preceding claim,
   wherein the representations of surroundings of vehicles are static maps of the surroundings of the vehicles, in particular of the frontal surroundings of the vehicles and
   wherein the static maps of the surroundings of the vehicles are generated by generalizing over a predefined number of, preferably 2 to 10 and most preferably 4, consecutive frames of a recording of the surroundings of the vehicle.

7. Computer-implemented method according to any preceding claim,
   wherein the representations of surroundings of vehicles are recorded by a radar sensor.

8. Computer-implemented method according to claim 7,
   wherein each representation recorded by the radar sensor is down-sampled before being input to the CNN.

9. Computer-implemented method according to any preceding claims,
   wherein the method is executed live during operation of the vehicle.

10. Computer program comprising instructions which cause a computer to execute the steps of the computer-implemented method according to any preceding claim.

11. Computer-readable medium having stored thereon the computer program according to claim 10.

12. Data processing system (20), comprising means (21, 22) for executing the computer-implemented method according to any of claims 1 to 9.

# FIG 1

# FIG 2

# FIG 3

T1 ☐

↓

T2 ☐

↓

T3 ☐

# FIG 4

10

# FIG 5

20

MON 25
24 HID

RAM MEM 23
22

I/O 26    CPU 21

Europäisches
Patentamt

European
Patent Office

Office européen
des brevets

# EUROPEAN SEARCH REPORT

Application Number

EP 21 17 8125

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HECKER SIMON ET AL: "End-to-End Learning of Driving Models with Surround-View Cameras and Route Planners", 6 October 2018 (2018-10-06), ICIAP: INTERNATIONAL CONFERENCE ON IMAGE ANALYSIS AND PROCESSING, 17TH INTERNATIONAL CONFERENCE, NAPLES, ITALY, SEPTEMBER 9-13, 2013. PROCEEDINGS; [LECTURE NOTES IN COMPUTER SCIENCE; LECT.NOTES COMPUTER], SPRINGER, BERLIN, HEIDELBERG, PAGE(S) 449 - 4, XP047488248, ISBN: 978-3-642-17318-9 [retrieved on 2018-10-06] * abstract; figure 1; tables 2-3 * * page 450 - page 452 * * page 455 - page 464 * | 1-12 | INV. G06N3/04 G06N3/08 B60W60/00 |
| X | WULFMEIER MARKUS ET AL: "Watch this: Scalable cost-function learning for path planning in urban environments", 2016 IEEE/RSJ INTERNATIONAL CONFERENCE ON INTELLIGENT ROBOTS AND SYSTEMS (IROS), IEEE, 9 October 2016 (2016-10-09), pages 2089-2095, XP033011678, DOI: 10.1109/IROS.2016.7759328 [retrieved on 2016-11-28] * abstract * | 1-12 | |
| | -/-- | | TECHNICAL FIELDS SEARCHED (IPC) G06N B60W |

The present search report has been drawn up for all claims

| Place of search | Date of completion of the search | Examiner |
|---|---|---|
| The Hague | 29 November 2021 | Cilia, Elisa |

Europäisches
Patentamt

European
Patent Office

Office européen
des brevets

# EUROPEAN SEARCH REPORT

Application Number

EP 21 17 8125

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YUNPENG PAN ET AL: "Agile Off-Road Autonomous Driving Using End-to-End Deep Imitation Learning", ARXIV.ORG, CORNELL UNIVERSITY LIBRARY, 201 OLIN LIBRARY CORNELL UNIVERSITY ITHACA, NY 14853, 21 September 2017 (2017-09-21), XP081323203, * page 1 - page 4 * * abstract; figure 3 * * section 5-7 * | 1-12 | |
| X | GRIGORESCU SORIN MIHAI ET AL: "NeuroTrajectory: A Neuroevolutionary Approach to Local State Trajectory Learning for Autonomous Vehicles", IEEE ROBOTICS AND AUTOMATION LETTERS, IEEE, vol. 4, no. 4, 1 July 2019 (2019-07-01), pages 3441-3448, XP011736585, DOI: 10.1109/LRA.2019.2926224 [retrieved on 2019-07-24] * abstract; figures 1-5, 8 * * page 3441 - page 3448 * | 1-12 | |
| A | SORIN GRIGORESCU ET AL: "A Survey of Deep Learning Techniques for Autonomous Driving", ARXIV.ORG, CORNELL UNIVERSITY LIBRARY, 201 OLIN LIBRARY CORNELL UNIVERSITY ITHACA, NY 14853, 17 October 2019 (2019-10-17), XP081627565, DOI: 10.1002/ROB.21918 * the whole document * | 1-12 | TECHNICAL FIELDS SEARCHED (IPC) |

The present search report has been drawn up for all claims

| Place of search | Date of completion of the search | Examiner |
|---|---|---|
| The Hague | 29 November 2021 | Cilia, Elisa |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)